# EUROPEAN PATENT APPLICATION

(11) **EP 1 650 897 A1**
(43) Date of publication of application: **26.04.2006**
(21) Application number: 05022783.4
(22) Date of filing: 19.10.2005
(51) Int. Cl.: H04L 12/24

(54) **Element management method and system in multiple networks**

(30) Priority: 19.10.2004 KR 2004083762
(71) Applicant: Samsung Electronics Co., Ltd., Suwon-si, Gyeonggi-Do (KR)
(72) Inventor: Bae, Keun Ah, Suwon-si Gyeonggi-do (KR)
(74) Representative: Lang, Johannes

(57) **Abstract**

In an element management method or system for use with multiple networks having a plurality of network elements, each network element is provided with a specific identifier, and the specific identifier of each network element and connections between respective network elements are stored in a configuration table, while aliases of each network element corresponding to a specific identifier are stored in a common table alias list. When network configuration information is requested by an operator, the alias of the network element corresponding to each specific identifier is displayed on a management screen of the operator.

## Description

### BACKGROUND OF THE INVENTION

### Technical Field

The present invention relates generally to network element management and, more particularly, to an element management method and system for use with multiple networks, in which any moving node is provided with an identifier (ID) which is specific within all of the levels using a data level processing technique, thereby insuring usefulness in management of the networks.

### Description of the Related Art

Today, with development of communication networks, various kinds of services accompanied with transmission and reception of a large amount of data are required in order to cope with the increase in high-speed communication network users, and to meet their various demands. An element management system (EMS) for managing and operating the communication network is required to store and manage a large amount of data compared to the amount of data which was stored previously.

In general, a network comprises a set of plural network elements (NEs). The NEs constituting the network include a router, a switch, and so forth. In addition, elements constituting a mobile communication system, such as a base station, a base station controller, a base station management system, a mobile switching center system, a home location register system and so forth, may be considered as the NEs. In order to effectively perform operation, management, etc. of the network constituting the plurality of NEs, there is an increasing need for the EMS to manage the NEs.

The following patents are considered to be generally pertinent to the present invention, but are burdened by the disadvantages set forth above: U.S. Patent No. 6,845,395 to Blumenau *et al.,* entitled *METHOD AND APPARATUS FOR IDENTIFYING NETWORK DEVICES ON A STORAGE NETWORK,* issued on January 18, 2005; U.S. Patent No. 6,832,251 to Gelvin *et al.,* entitled *METHOD AND APPARATUS FOR DISTRIBUTED SIGNAL PROCESSING AMONG INTERNETWORKED WIRELESS INTEGRATED NETWORK SENSORS (WINS),* issued on December 14, 2004; U.S. Patent No. 6,735,630 to Gelvin *et al.,* entitled *METHOD FOR COLLECTING DATA USING COMPACT INTERNETWORKED WIRELESS INTEGRATED NETWORK SENSORS (WINS),* issued on May 11, 2004; U.S. Patent No. 5,862,325 to Reed *et al.,* entitled *COMPUTER-BASED COMMUNICATION SYSTEM AND METHOD USING METADATA DEFINING A CONTROL STRUCTURE,* issued on January 19, 1999; U.S. Patent No. 6,778,651 to Jost *et al.,* entitled *APPARATUS AND METHOD FOR FACILITATING SERVICE MANAGEMENT OF COMMUNICATIONS SERVICES IN A COMMUNICATIONS NETWORK,* issued on August 17, 2004; U.S. Patent No. 6,738,908 to *Bonn et al.,* entitled *GENERALIZED NETWORK SECURITY POLICY TEMPLATES FOR IMPLEMENTING SIMILAR NETWORK SECURITY POLICIES ACROSS MULTIPLE NETWORKS,* issued on May 18, 2004; U.S. Patent No. 6,487,405 to Dapper, entitled *COMMUNICATION SYSTEM WITH MULTICARRIER TELEPHONY TRANSPORT FOR CONTROLLING A PLURALITY OF SERVICE UNITS,* issued on November 26, 2002; U.S. Patent No. 6,359,976 to Kalyanpur *et al.,* entitled *SYSTEM AND METHOD FOR MONITORING SERVICE QUALITY IN A COMMUNICATIONS NETWORK,* issued on March 19, 2002; U.S. Patent No. 6,347,085 to Kelly, entitled *METHOD AND APPARATUS FOR ESTABLISHING COMMUNICATIONS BETWEEN PACKET-SWITCHED AND CIRCUIT-SWITCHED NETWORKS,* issued on February 12, 2002; U.S. Patent No. 6,330,452 to Fattouche *et al.,* entitled *NETWORK-BASED WIRELESS LOCATION SYSTEM TO POSITION AMPS (FDMA) CELLULAR TELEPHONES, PART I,* issued on December 11, 2001; and U.S. Patent No. 6,282,267 to Nolting, entitled *NETWORK PLANNING TRAFFIC MEASUREMENT PROGRAM,* issued on August 28, 2001.

### SUMMARY OF THE INVENTION

It is, therefore, an objective of the present invention to provide an element management system (EMS) and method which are capable of storing and managing a large amount of data compared to the amount of data previously stored.

It is an additional objective of the present invention to provide an element management system (EMS) and method which fulfill the increasing need for management of network elements (NEs).

It is also an objective of the present invention to provide an element management system (EMS) and method which operate in multiple networks, and which are capable of reducing the time required for a change of data by updating all location values stored by log data into ID values of changed nodes when a specified node moves to a node of a level lower than another higher level in a tree structure of an element management system during multi-network system management.

According to an aspect of the present invention, an element management method is provided, the method comprising: granting each network element with a specific identifier; and storing the specific identifier according to each network element as well as a connection between the respective network elements, and an alias of the network element corresponding to each specific identifier. When network configuration information is requested by an operator, the alias of the network element corresponding to each specific identifier is displayed on a management screen of the operator.

The specific identifier according to each network element and the connection between the respective network elements are stored in a configuration table, and the alias of the network element corresponding to each specific identifier is stored in a common table alias list.

The specific identifier according to each network element is distinguished from the other network elements on the whole network, and is granted in a form wherein an interrelationship with a level of another network connected with the corresponding network element is not expressed. Furthermore, the specific identifier according to each network element may be granted in the form of a number increased or decreased sequentially according to a sequence generated.

The configuration table is formed according to each level of the network, and the configuration table formed according to each level includes information relating to a connection with a higher level. During the movement of the network element, data in various kinds of log data tables of the network are not changed.

Further, the movement of the network element prevents the specific identifier according to each network element from being changed.

According to another aspect of the present invention, an element management system comprises a specific identifier granted to each of the network elements, and a database for storing the specific identifier according to each network element, as well as a connection between the respective network elements, and an alias of the network element corresponding to each specific identifier. When network configuration information is requested by an operator, the alias of the network element corresponding to each specific identifier is displayed on a management screen of the operator.

The database includes a configuration table for storing the specific identifier according to each network element, and the connection between the respective network elements, and a common table alias list storing the alias of the network element corresponding to each specific identifier.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
Fig. 1shows the interworking relationship of an EMS and a network to be managed;
Fig. 2 shows the management screen of the EMSs of Fig. 1;
Fig. 3 shows a change of header information table when a node is moved;
Fig. 4 shows a change of node configuration of each level when a node is moved;
Fig. 5 shows a change of log data when a node is moved;
Fig. 6 shows the generation of a level ID in an EMS in accordance with the present invention
Fig. 7 shows movement of an EMS level according to the present invention;
Fig. 8 shows a change of header information table when a node is moved in accordance with the present invention;
Fig. 9 shows a change of level-specific node configuration when a node is moved in accordance with the present invention; and
Fig. 10 shows an exemplary embodiment of log data according to the present invention.

### DETAILED DESCRIPTION OF THE PREFERRED EMBODIMENTS

The present invention will now be described more fully hereinafter with reference to the accompanying drawings, in which preferred embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, the thickness of layers and regions are exaggerated for clarity. Like numbers refer to like elements throughout the specification.

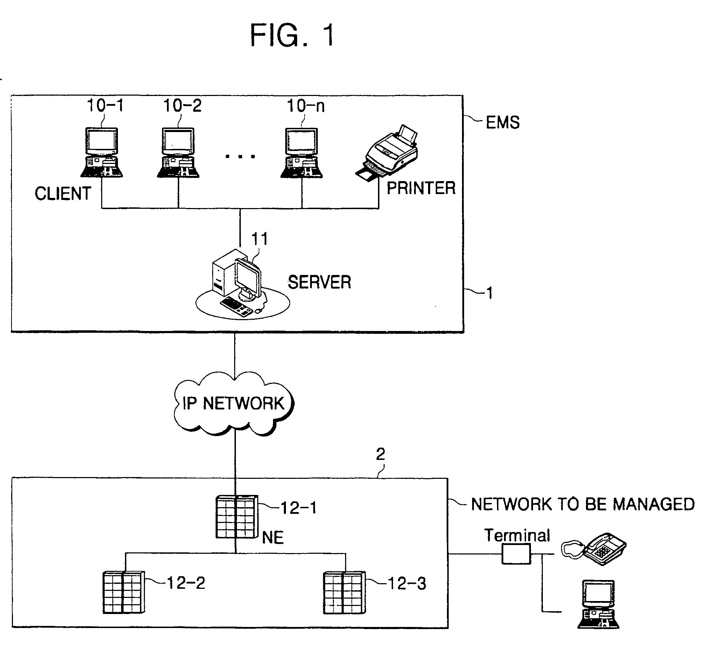

Fig. 1 shows the interworking relationship of an EMS and a network to be managed.

It can be seen from Fig. 1 that the EMS 1 is composed of EMS clients 10-1, 10-2 ... 10-n and an EMS server 11, and the network 2 to be managed is composed of NEs 12-1, 12-2 and 12-3. Thus, the EMS 1 and the network 2 are operated in a server-client mode.

Each of the EMS clients 10-1, 10-2 ... 10-n is provided for the purpose of managing the NEs 12-1, 12-2 and 12-3, and controls a main function of the EMS 1 by use of a graphic user interface (GUI). The EMS server 11 is an element of the EMS 1 and serves as an interface with the NEs 12-1, 12-2 and 12-3, and also serves to transmit instructions received from the EMS clients to the NEs 12-1, 12-2 and 12-3, while also transmitting information received from the network to the EMS clients 10-1, 10-2 ... 10-n. In addition, the EMS server 11 manages a database, and provides desired information.

Each of the NEs 12-1, 12-2 and 12-3 is a system constituting the network 2 which the EMS 1 is intended to manage. Taking a communication system by way of example, a mobile switching center, a plurality of base station controllers depending on the mobile switching center, a plurality of base stations connected to the base station controllers, *etc.* serve as the NEs 12-1, 12-2 and 12-3 constituting the network of interest.

The EMS 1 managing the plurality of NEs 12-1, 12-2 and 12-3 provides various management functions, such as general management, configuration management, fault management, performance management, security management, accounting management, call processing management, and so forth.

The general management function of the EMS I supports self status monitoring functions, such as processor status monitoring, network status monitoring, present server resource situation (CPU, file system, memory) monitoring, database status monitoring and so forth.

The configuration management function involves the management of a variety of information associated with the NEs 12-1, 12-2 and 12-3 to be managed. All of the information on configuration is stored in a database, and a variety of related data is provided when required by an operator. Information on profiles of the NEs 12-1, 12-2 and 12-3 is expressed in a graphic form through the use of various kinds of viewers.

To be specific about the configuration management function, there are generally three kinds of functions: a network configuration function involving registration and deletion of each NE intended for management, and providing it in a pop-up menu type in a network viewer; a database download or upload function involving the downloading or uploading of related information when stored configuration information is spoiled; and a software download function involving the downloading of software for units operating in the network to be managed, and making use of the software when the software is maintained, repaired or upgraded in version.

Further, the configuration management function may be categorized as follows: a service management function of providing setting and referring functions with respect to various services provided at L2 and L3 switches; a call history search function involving storage and management of a call set status in the database, and searching a status of a particular port; an environment management function involving making reference to a status of the network to be managed, and setting information on operation and alarm report; and a line information management function of making reference to link status, present error situation, performance status of lines, and so forth.

For the fault management function, various kinds of fault information are stored and managed in the database, and if necessary, the operator can search the fault information and control a function for processing the fault.

The EMS 1 includes a database (DB) (not shown in Fig. 1) having a plurality of tables for storing and managing various log data, a statistical processing processor for collecting data associated with performance of the NEs 12-1, 12-2 and 12-3 to provide information by means of which operation of the system can be determined, and a GUI for displaying the NEs 12-1, 12-2 and 12-3, which have shapes which are complicated and of various types, in a graphic form, *etc.*

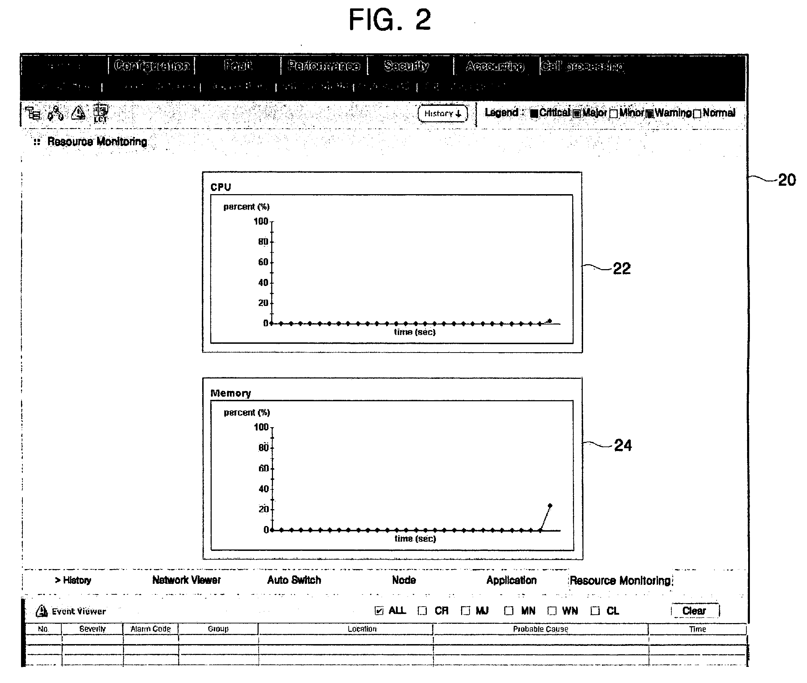

Fig. 2 shows the management screen of the EMS of Fig. 1.

As seen in Fig. 2, the EMS management screen 20 allows general management, configuration management, fault management, performance management, security management, etc. to be performed. The screen 20 displayed in Fig. 2 shows a display 22 of CPU share (%) and a display 24 of memory use rate (%) according to time.

The NEs 12-1, 12-2 and 12-3 of Fig. 1 are usually expressed in a tree structure, and read out and analyze levelized information in sequence (e.g., of rack information, self information, slot information and board information) so as to generate an object of interest, and express an object in graphic form so as to adjust management information based on location changes of the NEs 12-1, 12-2 and 12-3.

An existing level system is a structure wherein the data in each table have an ID of a higher level. In other words, the existing level system is adapted to have a specific value by combination of the higher level ID and its own ID.

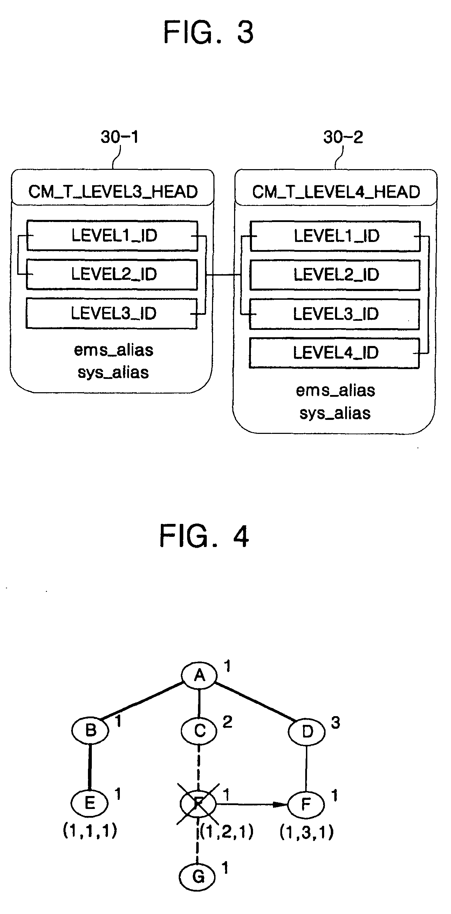

Figs. 3 to 5 show existing procedures of generating and shifting a general level, taking a level 3 by way of example.

The existing procedure of generating the level generates a level identifier (ID) inclusive of all on the basis of an ID of each level to which one of nodes is connected. In other words, the existing level system is designed so that the data in each table include the higher level of ID to have the specific value by combination of the higher level of ID and its own ID.

When a node located at level 3 is shifted, there is a high possibility that nodes of levels 2 and 1 connected to the corresponding node are changed as well. In this case, a configuration table of the corresponding node should be changed first, wherein the configuration table should be changed in an inclusive manner, that is, including the IDs of the nodes of the higher level of the node to be shifted.

After the configuration table is changed, a location list should be changed. In this case, the nodes of the respective levels, connected to the shifted node after the configuration table is changed, should be changed in all their IDs. After the configuration table and the location list are changed, various kinds of log data should be changed, which will be discussed with reference to Fig. 3.

Fig. 3 shows a change of header information table when a node is moved.

The header information table 30-1 of level 3 has all of the information of levels 1, 2 and 3, and the header information table 30-2 of level 4 includes all of the information of levels 1, 2, 3 and 4.

The header information tables 30-1, 30-2 of Fig. 3 have an inevitable structure under a system of using information of the other levels connected with one of the NEs 12-1, 12-2 and 12-3 in order to express the NE.

Fig. 4 shows a change of node configuration of each level when a node is moved.

Referring to Fig. 4, it is assumed that a node F of level 3 is moved. The node F, before being moved, is located under a line where level 1 is a node A and a line where level 2 is a node C. In Fig. 4, it is shown that the node F of level 3 is moved to a line where level 2 is a node D.

In this case, the node F may have an ID expressed by (1,2,1) before being moved, and by (1,3,1) after being moved. Thus, it can be seen that the ID of node F is changed. In other words, when a specified NE is changed in location within the corresponding network, the NE is also changed in ID. Therefore, the fact that the location is changed on the network has influence on ID. This means that all of the information in the database, in which a value of the ID of the NE is included as data, should be changed as well.

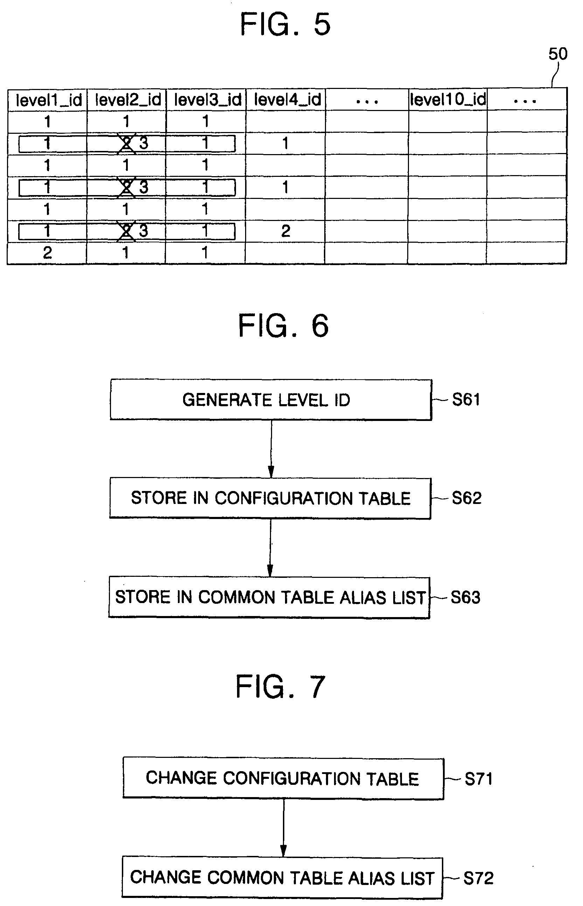

Fig. 5 shows a change of log data when a node is moved.

Fig. 5 assumes an example as in Fig. 3. This example has the configuration changed in such a manner that an element F of level 3, which has been connected with an element A of level 1 and an element C of level 2, is connected with an element D of level 2.

It can be found that nodes of higher and lower levels connected to each node are sequentially recorded in a log data table 50. As in the above-mentioned example, all of the information that a node F of level 3, or a node of level 3 having an ID of 2, moves from a node of level 2 having an ID of 2 to a node of level 2 having an ID of 3 should be changed.

Since the node of level 2 having the ID of 2 is connected with nodes of higher levels as well as nodes of lower levels, only one of the data should not be changed, but all of the log data should be changed.

As set forth above, the existing level system has a specific value by combination of the IDs of the higher level and its own ID. As a result, when a certain node moves to a level lower than the level of another higher level. For example when a certain NE of level 3 moves to a level lower than another network (level 1) or a sub-network (level 2), all of the log data storing location values should be changed in values of the IDs. When a quantity of data is much, it is exposed a problem that it takes much time beyond expectation to update information in the database based on movement of the location of the NE.

Nodes of level 1, level 2, level 3, *etc.,* shown in a tree structure of an element management system (EMS), have information stored in respective tables, wherein each table has an ID system connected with IDs of higher levels.

In the present invention, even when a node is moved with an existing ID system improved, the node is adapted to be easily moved without any change of log-related data having a location value.

A log table appeared in a configuration of the present invention includes a header information table for storing header information, and a tail information table for storing tail information.

The log table is managed by a database (DB). The DB serves to manage and store data communicated with a manager-specific system on operating the EMS. The data managed by the operated DB are generally divided and managed into synchronization profile information reflecting a current system profile, and all log data generated during operation.

The table storing the log data includes various kinds of tables for carrying out performance management, fault management, configuration management, security management, connection management, etc.

For example, among data of level 1, header information has a format stored in a header configuration table *cm_t_levell_head,* and tail information has a format stored in a tail configuration table *cm_t _level1_tail.*

Furthermore, in order to designate an alias of the level in the EMS, information mapping the ID and the alias is stored in a common table alias list.

When an ID of a new node is generated in the EMS, a newly generated ID is granted to the related configuration header table in the DB. At this time, when the ID of the node is sequentially generated to have a specific value throughout all of the levels, the specific ID of the node itself is kept as it stands, even when the ID of the higher level is changed by using a specified node. For this reason, it is unnecessary to change the log data having a location value.

Thus, a plurality of tables storing the log data having the location value should be changed (for example, to have only the specified ID as a column) in an existing structure where the IDs from level 1 to level 10 constitute the column.

A description of the generation of a level ID and movement of the corresponding node will now be made with reference to Figs 6 and 7.

Fig. 6 shows the generation of a level ID in an EMS in accordance with the present invention.

When a manager generates an ID of a new node on an EMS management screen (S61), the generated level ID is stored on a configuration table in a DB (S62). The configuration information is information relative to the structure of a network to be managed in the EMS, and indicates that the network to be managed corresponds to a sub-network subordinated to a certain network, and comprises a certain NE of a lower level of the sub-network, etc.

At this point, when a new ID of the node is generated so as to be sequential to an existing ID, the new ID is adapted to have a specific value throughout all of the levels. In this manner, although a particular node moves so as to cause an ID of a higher level connected with the moved node to develop, the specific ID of the node itself is kept as it stands. Thus, it is unnecessary to change the log-related data storing location values.

The level ID stored in the configuration table is stored together with a location on the network corresponding to the level ID of the common table alias list (S63).

Information corresponding to the "location", from information stored in the various tables, is stored with the ID, namely, a numerical value. When this numerical value is displayed on an EMS screen without any change, it will be expressed in a format like "1/1/2/3." This format makes it difficult for the operator to recognize where the corresponding node is located.

For this reason, a table or list is required, which table or list maps a value of the ID and a value of a character string. This table or list is none other than the common table alias list. For instance, when level 1 of the configuration table has an ID of 1, level 1 of the common table alias list has an alias of *"Gyeonggi-do".* An alias of level 2 is *"Nam-suwon telephone office"* for an ID of level 2 having a value of 1. An alias of level 3 is *"laboratory at the second floor"* for the ID of level 3. In this manner, the level and the ID have a type of alias and a value set to the network, respectively, expressed in a list form.

As mentioned above, the mapped information is stored in the common table alias list. When a new node is generated in the EMS, the value of the level ID is stored in the configuration table, and the alias (namely, the value of character string displayed on the EMS screen) is stored in the common table alias list. In the foregoing example, the alias of the level may be expressed on the EMS display screen in a form like *"*/*Gyeonggi-do* /*Nam-suwon telephone office*/*laboratory at the second floor."*

Fig. 7 shows movement of an EMS level according to the present invention.

The procedure of generating and storing the level ID has been described with reference to Fig. 6. In Fig. 7, a description will be made about data which should be changed together when an NE generated in advance (i.e. a node) is moved.

It can be seen from Fig. 6 that the ID value set for the node according to each level is given as the specific value throughout all of the levels. Hence, when one of the nodes is moved, the configuration table indicating a level-specific connection should be also changed (S71). However, it is unnecessary to change the log data as in the prior systems or methods.

Furthermore, the content of the common table alias list, which provides mapping between the configuration information and the alias or the character string, set to facilitate recognition of the user, should be changed (S72).

In the present invention, the concept of the alias is very important. This is because the location value of the network configuration infonnation is stored in the table in character string form as displayed on the EMS management screen.

In this case, in the table for performing history management, such as performance management, fault management etc., the locations of all of the information are stored in a form like *"*/*Gyeonggi-do* /*Nam-suwon telephone office*/*laboratory at the second floor."*

In this situation, when the NE displayed on the EMS management screen as the *"laboratory at the second floor"* is changed to a *"laboratory at the third floor"* when equipment in the laboratory at the second floor is shifted to the laboratory at the third floor, only numerical values of 1, 2, ... are allocated for the IDs in the configuration table, and the common table alias list mapping the numerical values is designated separately. This is because the old data and the information stored in the history management table may be inconsistent with each other.

Specifically, the NE having the information *"laboratory at the second floor"* is stored with a value of 2 in the configuration table, and is stored as *"laboratory at the second floor"* in the common table alias list. When the movement of the node takes place as discussed above, *"laboratory at the second floor"* has only to be changed to *"laboratory at the third floor"* in the common table alias list.

Similarly, since only an ID having a numerical value of 2 is stored in the table for performance management, fault management *etc.,* change is not required. Only when it is displayed on the EMS management screen is the value of the alias brought from the common table alias list.

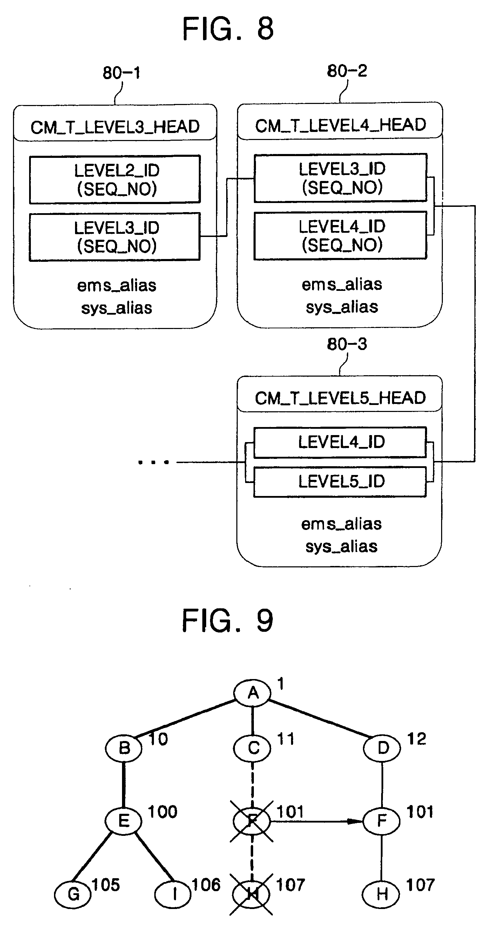

Fig. 8 shows a change of header information table when a node is moved in accordance with the present invention.

It can be seen from Fig. 8 that the header information table is considerably different from the header information table of Fig. 1.

In Fig. 3, each of the level-specific configuration tables 30-1 and 30-2 has level IDs ranging from level 1 ID to its own level ID. This is because uniqueness is guaranteed when all of the level IDs, beginning with the highest level ID and extending to a lower level ID connected with its own node, are to be combined.

By contrast, in Fig. 8, according to the present invention, the level-specific configuration tables 80-1 and 80-2 have only the IDs of the next higher level. In other words, the configuration table 80-1 of level 3 has only the IDs of levels 2 and 3, and the configuration table 80-2 of level 4 has only the IDs of levels 3 and 4.

Because the corresponding ID value guarantees uniqueness of the level, it is essential to have information on the ID of the next higher level in order to indicate the specified higher level with which the level of the table in questions is connected

All of the usual configuration information are made up of the levels, wherein all of the higher and lower levels are interconnected, and this is called a parent-child relationship in the DB. In this case, when data of the higher level are deleted, data of the lower level are automatically deleted. For instance, when a specified telephone office displayed on the EMS management screen is deleted, it is natural that the NE managed by the telephone office be deleted as well.

In other words, in the present invention, the configuration table has the ID of the higher level for the purpose of detecting which higher level is connected with its own level. This is because the level ID is a unique ID, and thus there is no defect in configuration information management, even when the configuration table has only the level ID which is higher than its own level by one level without the necessity of having all of the level IDs.

Fig. 9 shows a change of level-specific node configuration when a node is moved in accordance with the present invention.

The embodiment of Fig. 9 shows a total of four levels. Level 1 is provided with an NE A having an ID of 1, and level 2 is provided with NEs B, C and D having IDs of 10, 11 and 12, respectively. Level 3 is provided with NEs E and F. In the present embodiment, it is assumed that the NE F is connected with the NE C of level 2, but moves so as to be connected with the NE D of level 2. Furthermore, the NE F of level 3 moves together with an NE H connected to a level lower than the NE F.

After movement, the connection is changed from A-C-F-H to A-D-F-H. Here, it can be seen that the NEs F and H have IDs of 101 and 107 without any change. In prior systems or methods, the existing ID employs a form indicating relation with the higher level. In the present invention, the ID is selected independently of another connected NE. Thus, the movement of the node causes the configuration to be changed, but it does not allow its own ID to be changed. In other words, the data in the configuration table should be changed when the NE changes location, but the log data corresponding to the ID of each NE does not have to be changed.

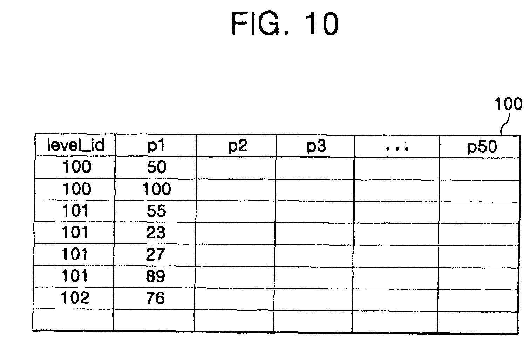

Fig. 10 shows an exemplary embodiment of log data according to the present invention.

Fig. 10 indicates that, even when an NE having a level ID of 101 is moved, log data are not changed. In Fig. 10, one line wherein all of the data of level ID, p1, p2 ... p50, forming one transverse line, are summed serves as a set of data.

The log data table 100 of Fig. 10 shows seven sets of data. The symbols p1, p2 ... p50 simply stand for column items, and do not have a special meaning. Since these column items are changed in various kinds of log data tables, they are only used in the abstract. Taking a performance management table by way of example, columns items such as *alarm_time, reserve_str,etc.* are given.

In the present invention, because the ID of each level is unique, the log data table of Fig. 10 for storing log data includes one column item for storing the level IDs, and so it is unnecessary to change the data in the log data table when the node is moved. However, in order to display, on the EMS management screen, the data generated from the node to which the higher level is subordinated, it does not matter that only a configuration management table having the higher level IDs is referenced.

According to the present invention, any node moving in the EMS is adapted to generate the unique ID within all of the levels of the EMS. Therefore, when a node is used in the tree structure of the EMS, no change of the log data is caused even though the ID values of the higher levels are changed.

Although exemplary embodiments of the present invention have been described, it will be understood by those skilled in the art that the present invention should not be limited to the described exemplary embodiments. Rather, various changes and modifications can be made within the spirit and scope of the present invention, as defined by the following claims.

## Claims

1. An element management method for use with multiple networks having a plurality of network elements, comprising the steps of:
providing each network element with a specific identifier;
storing the specific identifier of said each network element and connections between respective network elements; and
storing an alias of said each network element corresponding to each specific identifier;
wherein, when network configuration information is requested by an operator, the alias of said each network element corresponding to said each specific identifier is displayed on a management screen of the operator.

2. The element management method of claim 1, wherein the specific identifier of said each network element and the connections between the respective network elements are stored in a configuration table.

3. The element management method of claim 2, wherein the configuration table is formed according to each level of a given network, and the configuration table includes information relating to a connection with a higher level.

4. The element management method of claim 1, wherein the alias of said each network element corresponding to each specific identifier is stored in a common table alias list.

5. The element management method of claim 1, wherein the specific identifier according to each network element is distinguished from the other network elements on all of the networks, and is provided in such a form that an interrelationship with a level of another network connected with the corresponding network element is not expressed.

6. The element management method of claim 5, wherein the specific identifier according to each network element is provided in a form of a number varied sequentially according to a sequence generated.

7. The element management method of claim 6, wherein variation of the number comprises one of increasing and decreasing sequentially according to a sequence generated.

8. The element management method of claim 1, wherein the alias of said each network element is in a form of a character string.

9. The element management method of claim 1, wherein, when a network element generated previously is moved, the configuration table and the common table alias list are changed and stored according to a change of a connection with a higher level, the change being caused by the movement of the network element.

10. The element management method of claim 9, wherein, during the movement of the network element, data contained in various types of log data tables of the network are not changed.

11. The element management method of claim 10, wherein the movement of the network element allows the specific identifier of each network element not to be changed.

12. The element management method of claim 9, wherein the movement of the network element allows the specific identifier of each network element not to be changed.

13. An element management system for use with multiple networks having a plurality of network elements, comprising:
means for providing a specific identifier for each network element; and
a database for storing the specific identifier of said each network element and connections between respective network elements, and for storing an alias of said each network element corresponding to each specific identifier;
wherein, when network configuration information is requested by an operator, the alias of said each network element corresponding to each specific identifier is displayed on a management screen of the operator.

14. The element management system of claim 13, wherein the database includes:
a configuration table for storing the specific identifier of said each network element and the connections between the respective network elements; and
a common table alias list for storing the alias of said each network element corresponding to each specific identifier.

15. The element management system of claim 14, wherein the configuration table is formed according to each level of a given network, and the configuration table includes information relating to a connection with a higher level.

16. The element management system of claim 13, wherein the specific identifier of said each network element is distinguished from the other network elements on all of the networks, and is provided in such a form that an interrelationship with a level of another network connected with the corresponding network element is not expressed.

17. The element management system of claim 13, wherein the alias said each network element is in a form of a character string.

18. The element management system of claim 13, wherein, when a network element generated previously is moved, the configuration table and the common table alias list are changed and stored according to a change of a connection with a higher level, the change being caused by movement of the network element.

19. The element management system of claim 18, wherein, during the movement of the network element, data contained in various types of log data tables of the network are not changed.

20. The element management system of claim 19, wherein the movement of the network element allows the specific identifier of said each network element not to be changed.
